## Europäisches Patentamt
## European Patent Office
## Office européen des brevets

(19)

(11) Numéro de publication: **0 003 924**
**B1**

(12)

# FASCICULE DE BREVET EUROPEEN

(45) Date de publication du fascicule du brevet: **17.02.82**

(21) Numéro de dépôt: **79400073.7**

(22) Date de dépôt: **06.02.79**

(51) Int. Cl.³: **F 24 D 17/00,**
**F 24 D 19/10, F 24 J 3/02**

(54) Chauffe-eau à accumulation alimenté en fluide chauffé par panneau solaire.

(30) Priorité: **20.02.78 FR 7804674**

(43) Date de publication de la demande:
**05.09.79 Bulletin 79/18**

(45) Mention de la délivrance du brevet:
**17.02.82 Bulletin 82/7**

(84) Etats contractants désignés:
**BE CH DE GB IT NL SE**

(56) Documents cités:
**DE - A - 2 431 493**
**FR - A - 2 282 607**
**FR - A - 2 299 601**

(73) Titulaire: **SAUNIER DUVAL - Société Anonyme**
**250, route de l'Empereur**
**F-92508 Rueil Malmaison (FR)**

(72) Inventeur: **Gouyou-Beauchamps, Jacques**
**"Le Monastère"**
**F-92410 Ville d'Avray (FR)**

(74) Mandataire: **Lhuillier, René**
**6, rue Lavoisier**
**F-93107 Montreuil Cédex (FR)**

Courier Press, Leamington Spa, England.

## Chauffe-eau à accumulation alimenté en fluide chauffé par panneau solaire

L'invention se rapporte à un chauffe-eau à accumulation alimenté en fluide chauffé par panneau solaire et concerne plus précisément l'agencement du circuit de chauffage avec appoint calorifique et pompe de circulation.

Il existe de nombreux systèmes pour chauffer l'eau d'un ballon à partir d'un panneau solaire dont la plupart utilisent un circuit de chauffe aboutissant à un échangeur placé dans l'enceinte d'accumulation. Pour compléter ce mode de chauffage on sait qu'il faut prévoir un appoint calorifique obtenu par des résistances électriques plongées dans le fluide du ballon, comme décrit dans le FR—A—2.282.607 et le FR—A—2.229.601, des thermostats commandant la mise sous tension de ces résistances dès que la température de l'eau atteint une température prédéterminée.

Tous ces dispositifs peuvent donner satisfaction mais ils nécessitant -de la part du constructeur- un outillage approprié puisqu'il faut prévoir dans le ballon d'accumulation d'une part un échangeur pour le circuit collecteur d'énergie solaire et d'autre part des résistances électriques d'appoint. Le chauffe-eau à accumulation ainsi réalisé est donc un appareil qui diffère des ballons classiques, et dont le coût de réalisation est donc plus élevé.

Le but de l'invention est en premier lieu d'éviter cet inconvénient en ce qu'elle permet la réalisation d'un chauffe-eau à accumulation alimenté en énergie calorifique par collecteur ou panneau solaire et qui utilise un réservoir d'accumulation classique-sans modifications importantes-, le système étant adaptable aisément à ce réservoir.

Suivant l'invention, on monte sur un circuit court disposé en dérivation sur le circuit principal du fluide de chauffage provenant du panneau solaire, un dispositif de chauffage d'appoint qui prélève l'eau à réchauffer directement dans le ballon et le lui restitue par l'intermédiaire de la tubulure terminale du circuit principal; le réchauffage de l'eau s'effectue alternativement soit par le panneau solaire soit par le chauffage d'appoint.

Suivant une caractéristique particulière de l'invention le circuit du chauffage d'appoint prélève l'eau à chauffer sensiblement au milieu du ballon d'accumulation et la réintroduit par un circuit court dans la section terminale -en aval du collecteur solaire- du circuit principal où se trouve disposée une unique pompe de circulation commune aux deux circuits, et cela pour que le chauffage d'appoint n'intéresse que la partie supérieure du ballon.

D'autres caractéristiques particulières et avantages de l'invention ressortiront de la description qui va suivre en référence au des-sin annexé qui représente une vue schématique du chauffe-eau alimenté par panneau solaire.

Le collecteur d'énergie solaire 1 se présente comme un corps plat à l'intérieur duquel circule l'eau à chauffer. Celle-ci arrive au panneau par le conduit 2 provenant d'une alimentation en eau froide 3 ou prélevée à la base du ballon d'accumulation 4 par un petit conduit 5. A la sortie du panneau solaire un conduit 6 aboutit par l'intermédiaire d'un clapet inverseur 10 à la tubulure d'arrivée 7 qui débouche dans le ballon au milieu de celui-ci. Cette tubulure se termine par un divergent 8 grâce auquel l'eau chaude arrive à vitesse très faible et s'oriente vers le haut ou vers le bas suivant qu'elle est plus chaude ou plus froide que l'eau contenue dans le ballon au point d'arrivée. Une pompe de circulation 9 est disposée sur cette tubulure 7. La pompe et le clapet inverseur font partie d'un boîtier standard 11, qui existe de façon connue dans les appareils de chauffage classiques à combustibles. On dispose en dérivation sur le circuit du collecteur d'énergie solaire un circuit court constitué d'un petit conduit 12 prélevant l'eau dans le ballon sensiblement à mi-hauteur et aboutissant au clapet inverseur 10. Sur ce circuit court est monté un dispositif de chauffage d'appoint 13 du genre chauff-eau électrique ou à gaz. Un départ de puisage 14 est aussi prévu sur le ballon. Enfin au boîtier 11 sont raccordés une sonde thermostatique 15 localisée sensiblement au milieu du ballon et une autre sonde 16 disposée à la base, ainsi qu'un capteur de température 17 disposé sur le conduit 6 à la sortie immédiate du panneau solaire.

Le chauffe-eau ainsi réalisé fonctionne de la manière suivante:

A la mise en route de l'appareil, l'eau est froide dans les ballons et les circuits, ainsi que les capteurs et sondes de température. Le clapet inverseur 10 est normalement en position haute. Le thermostat 15 détectant la température basse fait basculer le clapet inverseur 10 en position basse et met en route la pompe 9. L'eau prélevée au milieu du ballon qui circule dans le circuit court 12 est chauffée par le chauffe-eau d'appoint 13 et restituée par le conduit 7 au centre du ballon. Le chauffe-eau d'appoint ayant une certaine puissance assure en quelques minutes le remplacement dans la moitié supérieure du ballon, de l'eau froide par de l'eau chaude. La sonde 15 atteint alors une température prédéterminée $t_1$ au niveau de laquelle est commandé l'arrêt de la pompe et du chauffage d'appoint. Le clapet inverseur 10 revient en position haute. La sonde 16 détecte alors une température $t_2$ qui est inférieure à $t_1$, l'eau chaude étant évidemment concentrée à la partie haute du ballon.

Si la température détectée par la sonde 17 est supérieure à la température détectée par la sonde 16 d'une valeur prédéterminée, la pompe de circulation 9 se met en route en introduisant par le conduit 7 de l'eau réchauffée par le capteur solaire dans le ballon. Le chauffage d'appoint n'immobilise la pompe de circulation que pendant un temps court et il a priorité sur le chauffage solaire.

Dès qu'il y a puisage par le conduit 14, l'eau froide de remplacement provenant de l'alimentation 3 pénètre dans le ballon par le conduit 5. L'eau froide va remplacer progressivement l'eau chaude du ballon. Au bout d'un certain temps de puisage, ou même si le puisage est arrêté, par suite du refroidissement lent de l'eau, la sonde 15 va détecter au milieu du ballon une température inférieure à $t_1$ ce qui déclenche à nouveau le basculement de l'inverseur et éventuellement la mise en route de la pompe si celle-ci n'était pas déjà en fonctionnement dans un cycle de chauffage solaire. Dès que la partie supérieure du ballon est à nouveau à la température $t_1$, le clapet inverseur bascule, le chauffage d'appoint s'arrête et l'ensemble est disponible pour un nouveau cycle de chauffage solaire.

Le cas qui peut se présenter est celui où l'apport solaire est suffisant. Dans ce cas la totalité du ballon sera portée à une température supérieure à $t_1$, sans nécessiter le fonctionnement du chauffage d'appoint 13. Celui-ci interviendrait de nouveau si un puisage important amenait de l'eau froide non encore réchauffée au contact du thermostat $t_1$.

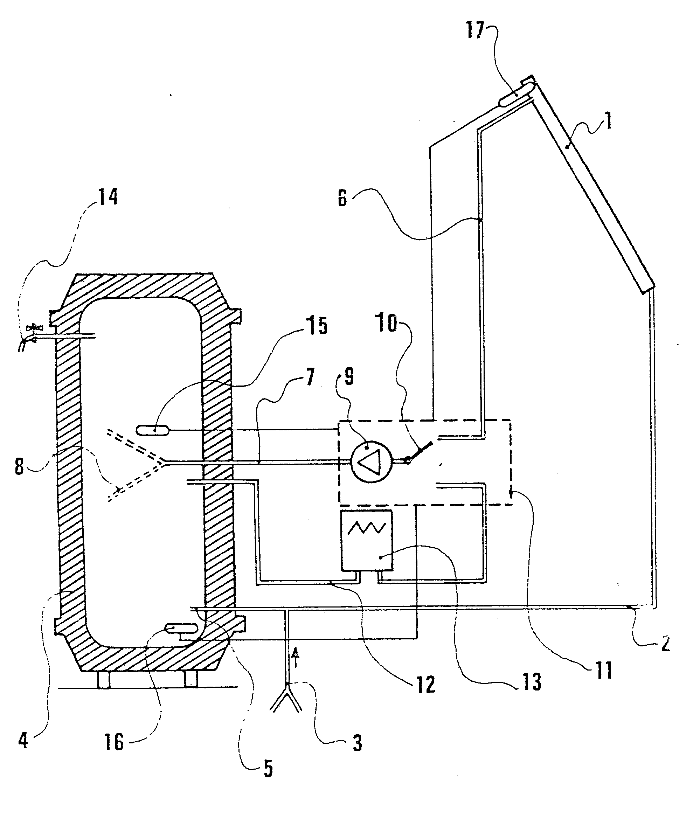

## Revendications

1. Chauffe-eau à accumulation comportant un circuit principal de chauffage d'un ballon d'accumulation alimenté par un panneau solaire et un dispositif de chauffage d'appoint caractérisé par le fait que le dispositif de chauffage d'appoint (13) est monté sur un circuit court (12) disposé en dérivation sur le circuit principal (2, 6, 7), l'eau à réchauffer par le dispositif de chauffage d'appoint étant directement prélevée dans le ballon et lui étant restituée par l'intermédiaire de la tubulure terminale (7) du circuit principal et par le fait que l'eau à réchauffer l'est alternativement soit par le panneau solaire (1), soit par le dispositif de chauffage d'appoint.

2. Chauffe-eau selon la revendication 1 caractérisé par le fait qu'une seule pompe (9) commune aux deux circuits est montée sur la tubulure terminale (7) de retour d'eau au ballon.

3. Chauffe-eau selon les revendications 1 et 2 caractérisé par le fait que la pompe (9) et un clapet inverseur (10), -destiné à raccorder la tubulure terminale (7) au circuit principal (2, 6, 7) ou au circuit court (12), font partie d'un boîter standard (11) équipant de façon connue les appareils de chauffage.

4. Chauffe-eau selon les revendications 1 et 2 caractérisé par le fait que la tubulur terminale (7) commune au circuit principal (2, 6, 7) et au circuit court (12) débouche sensiblement à mi-hauteur du ballon d'accumulation.

5. Chauffe-eau selon les revendications 1 et 4, caractérisé par le fait que la tubulure terminale (7) se termine -dans le ballon d'accumulation-, par un divergent grâce auquel l'eau arrive à faible vitesse.

6. Chauffe-eau selon la revendication 1 caractérisé par le fait que le prélèvement de l'eau du ballon dans le circuit court (12) s'effectue sensiblement à mi-hauteur du ballon d'accumulation.

7. Chauffe-eau selon les revendications 1 et 3 caractérisé par le fait que le boîtier (11) du clapet inverseur est raccordé à une sonde thermostatique (15) localisée sensiblement au milieu du ballon, à une autre sonde (16) disposée à la base du ballon, ainsi qu'à un capteur de température (17) disposé sur le conduit (6) à la sortie immédiate du panneau solaire (1).

8. Chauffe-eau selon les revendications 1 et 7, caractérisé par le fait que la sonde (15) commande la mise en marche de la pompe (9) et le déplacement du clapet inverseur (10) vers la position de fonctionnement du circuit court (12) quand elle a détecté une température inférieure à une température ($t_1$) prédéterminée, et qu'elle commande l'arrêt de la pompe et le retour du clapet inverseur vers la position de fonctionnement du circuit principal (2, 6, 7) quand elle a détecté une température supérieure à la température ($t_1$) prédéterminée.

9. Chauffe-eau selon les revendications 1 et 7, caractérisé par le fait que si la température détectée par la sonde (17) est supérieure -d'une valeur prédéterminée- à une température ($t_2$) détectée par la sonde (16), la pompe de circulation (9) se met en route pour le fonctionnement du circuit principal (2, 6, 7).

## Patentansprüche

1. Wasser-Speicherheizvorrichtung mit einem Haptheizungskreis für ein durch eine Solarheizplatte und eine Zusatzheizvorrichtung gespeistes Speichergefäss, dadurch gekennzeichnet, dass die Zusatzheizvorrichtung (13) auf einem Nebenkreis (12), parallel geschaltet am Hauptheizungskreis (2, 6, 7), angebracht ist, wobei das durch die Zusatzheizvorrichtung zu erwärmende Wasser unmittelbar aus dem Gefäss herausgenommen und ihm über das endständige Rohr (7) des Hauptkreises rückerstattet wird, und dass das zu erwärmende Wasser abwechselnd entweder durch die Solarheizplatte (1) oder durch die Zusatzheizvorrichtung erwärmt wird.

2. Wasser-Heizworrichtung nach dem Anspruch 1, dadurch gekennzeichnet, dass eine einzige, den beiden Kreisen gemeinsame Pumpe (9) an dem endständigen, zur Rückfürung des Wassers in das Gefäss vorgesehenen Rohr (7) angebracht ist.

3. Wasser-Heizvorrichtung nach den Ansprüchen 1 und 2, dadurch gekennzeichnet, dass die Pumpe (9) und das zur Verbindung des endständigen Rohrs (7) mit dem Hauptkreis (2, 6, 7) oder mit dem kurzen Kreis (12) bestimmte Umschaltventil zu einem die Heizgeräte in bekannter Weise verkleidenden Normalkasten (11) gehören.

4. Wasser-Heizvorrichtung nach den Ansprüchen 1 und 2, dadurch gekennzeichnet, dass das endständige, dem Hauptkreis (2, 6, 7) und dem kurzen kreis (12) geminsame Rohr (7) etwa auf halber Höhe des Speichergefässes mündet.

5. Wasser-Heizvorrichtung nach den Ansprüchen 1 und 4, dadurch gekennzeichnet, dass das enständige Rohr (7) in das Speichergefäss über einer Ausflussdüse endet, mit Hilfe derer das Wasser mit geringer Geschwindigkeit ankommt.

6. Wasser-Heizvorrichtung nach dem Anspruch 1, dadurch gekennzeichnet, dass die Herausnahme des Wassers aus dem Gefäss im kurzen Kreis (12) etwa auf halber Höhe des Speichergefässes vorgenommen wird.

7. Wasser-Heizvorrichtung nach den Ansprüchen 1 und 3, dadurch gekennzeichnet, dass der Kasten (11) des Umschaltventils mit einer etwa in der Mitte des Gefässes angeordneten Thermostat-Sonde (15), mit einer weiteren, am Gefässboden angeordneten Sonde (16) sowie einem an der Röhre (6) am unmittelbarem Ausgang der Solarheizplatte (1) angeordneten Temperatur-Messgerät (17) verbunden ist.

8. Wasser-Heizvorrichtung nach den Anspruchen 1 und 7, dadurch gekennzeichnet, dass die Sonde (15) das Anlassen der Pumpe (9) und die Verschiebung des Umschaltventils (10) auf die Betriebsstellung des Nebenkreises (12) steuert, wenn sie eine unterhalb einer vorbestimmeten Temperatur $(t_1)$ liegende Temperatur festgestellt hat, und dass sie das Anhalten der Pumpe und die Rückführung des Umschaltventils in die Betriebsstellung des Hauptkreises (2, 6, 7) steuert, wenn sie eine oberhalb der vorbestimmten Temperatur $(t_1)$ liegende Temperatur festgestellt hat.

9. Wasser-Heizvorrichtung nach den Ansprüchen 1 und 7, dadurch gekennzeichnet, dass falls die durch die Sonde (17) festgestellte Temperatur um einen vorbestimmten Wert über einer durch die Sonde (16) festgestellten Temperatur $(t_2)$ liegt, die Kreislaufpumpe (9) zur Betätigung des Hauptkreises (2, 6, 7) anspringt.

**Claims**

1. Water-storage heater, comprising a main circuit for the heating of a storage vessel, supplied by a solar panel and an auxiliary heating device, characterised in that the auxiliary heating device (13) is mounted on a short circuit (12), placed in shunt on the main circuit (2, 6, 7), the water, which is to be heated by the auxiliary heating device, being directly taken from the vessel and restored to the latter through the intermediary of the terminal tube (7) of the main circuit, and that the water, which is to be heated, is alternately heated either by the solar panel (1) or by the auxiliary heating device.

2. Water-heater according to Claim 1, characterised in that one single pump (9), common to the two circuits, is mounted on the terminal tube (7), provided for returning water to the vessel.

3. Water-heater according to Claims 1 and 2, characterised in that the pump (9) and the reverser valve (10), intended for connecting the terminal tube (7) to the main circuit (2, 6, 7) or to the short circuit (12), form part of a standard casing (11), enclosing heating apparatuses in a known manner.

4. Water-heater according to Claims 1 and 2, characterised in that the terminal tube (7), common to the main circuit (2, 6, 7) and to the short circuit (12) ends at a level, approximately half the height of the storage vessel.

5. Water-heater according to claims 1 and 4, characterised in that the terminal tube (7) ends in the storage vessel through a by-pass, with the aid of which the water arrives at a low velocity.

6. Water-heater according to Claim 1, characterised in that the drawing of water from the vessel in the short circuit (12) is effected at a level, approximately half the height of the storage vessel.

7. Water-heater according to Claims 1 and 3, characterised in that the casing (11) of the reverser valve is connected to a thermostatic probe (15), located approximately at the centre of the vessel, to another probe (16), arranged at the base of the vessel, as well as a temperature gauge (17), arranged on the pipe (6) at the direct exit of the solar panel (1).

8. Water-heater according to Claims 1 and 7, characterised in that the probe (15) operates the starting of the pump (9) and the movement of the reverser valve (10) towards the operating position of the short circuit (12), when it has detected a temperature below a pre-determined temperature $(t_1)$, and that it operates the stopping of the pump and the return of the reverser valve to the operating position of the main circuit (2, 6, 7), when it has detected a temperature above the pre-determined temperature $(t_1)$.

9. Water-heater according to Claims 1 and 7, characterised in that, if the temperature, detected by the probe (17), exceeds by a pre-determined value a temperature $(t_2)$, detected by the probe (16), the circulating pump (9) starts up for the operation of the main circuit (2, 6, 7).